(19) Europäisches Patentamt
European Patent Office
Office européen des brevets

(11) EP 1 730 228 B1

(12) **EUROPEAN PATENT SPECIFICATION**

(45) Date of publication and mention of the grant of the patent:
**15.08.2012 Bulletin 2012/33**

(21) Application number: **05742316.2**

(22) Date of filing: **28.03.2005**

(51) Int Cl.:
***C08K 9/04*** *(2006.01)* ***C08K 9/08*** *(2006.01)*
***C01B 33/44*** *(2006.01)*

(86) International application number:
**PCT/US2005/010352**

(87) International publication number:
**WO 2005/095506 (13.10.2005 Gazette 2005/41)**

(54) **NANO-COMPOSITE AND METHOD THEREOF**

NANOVERBUNDWERKSTOFF UND HERSTELLUNGSVERFAHREN DAFÜR

NANOCOMPOSITE ET PROCEDE ASSOCIE

(84) Designated Contracting States:
**DE ES FR GB IT**

(30) Priority: **29.03.2004 US 557412 P**

(43) Date of publication of application:
**13.12.2006 Bulletin 2006/50**

(73) Proprietor: **Bridgestone Corporation**
**Tokyo 104-8340 (JP)**

(72) Inventors:
- **WANG, Xiaorong**
**Hudson, Ohio 44236 (US)**
- **FOLTZ, Victor**
**Akron, OH 44312 (US)**
- **FUDEMOTO, Hiroyuki**
**Tokyo 187-8531 (JP)**

(74) Representative: **Oxley, Robin John George et al**
**Marks & Clerk LLP**
**90 Long Acre**
**London**
**WC2E 9RA (GB)**

(56) References cited:
**EP-A- 1 273 616** **EP-A- 1 321 489**
**DE-A1- 3 434 983** **US-A- 2 531 396**
**US-A- 5 707 439** **US-B1- 6 225 394**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 730 228 B1

## Description

### BACKGROUND OF THE INVENTION

The present invention is directed to a nano-composite that comprises a clay and a cationic mediator comprised of a hydrophobic unit and a cationic unit. The nano-composite is useful in formulating compositions such as rubber and tire products with improved and well-balanced properties including gas permeability, cure properties, and/or mechanical properties etc.

Since the discovery of exfoliated nylon/clay nano-composites by Usuki et al. (J. Mater. Res. 1993, 8, 1174), there have been extensive efforts directed to th e preparation of various polymer-layered material composites. A common morphology for miscible polymer-layered material dispersions is known as intercalation and exfoliation, which improves polymeric properties such as mechanical, gas barrier/permeability, thermal, and heat distortion temperature. However, for polymers, particularly nonpolar polymers, well-exfoliated polymer-layered material nano-composites are notoriously difficult to obtain.

Gas impermeability is important for many polymer products, for example, butyl rubber. However, unsaturated bonds in butyl rubber can be attacked by atmospheric ozone. These attacks may, over time, lead to oxidative degradation, which may subsequently lead to chain cleavage. As such, there exists a continuous interest in lowering gas permeability of polymers. One technique for lowering gas permeability is using well-exfoliated layered materials as an additive.

However, gas permeability must be balanced against other polymer properties such as vulcanization plateau, Shore A hardness, cure capability, rubber damping properties, cure time, modulus, and stress-strain, in order to achieve an overall superior performance. For example, although they reduce gas permeability, organo-clays derived from some organic ammonium salts of low decomposition temperature, may damage or retard the cure process of the rubber compound, especially, when using free radical cure, sulfur cure, ZnO cure and etc.

Advantageously, the present invention provides a nano-composite that is practically useful in formulating compositions such as rubber and tire products with improved and well-balanced properties including gas permeability, cure properties, and/or mechanical properties etc.

### SUMMARY OF THE INVENTION

The present invention provides a tire product comprising a nano-composite comprising a composition according to claim 1 comprising a clay; a cationic mediator comprised of a hydrophobic unit and a cationic unit; and a carbon-chain or a hetero-chain polymer, wherein the clay is exfoliated or intercalated by the cationic mediator and the polymer.

### BRIEF DESCRIPTION OF THE DRAWINGS

In the drawings appended hereto:

FIG. 1 shows small angle x-ray scattering (SAXS) of nano-composites comprising mica treated with a cationic mediator such as ionic liquid surfactant.

FIG. 2 shows the 2-dimensional image of small angle x-ray scattering (SAXS) of nano-composites comprising mica treated with a cationic mediator such as ionic liquid surfactant.

FIG. 3 shows the small angle x-ray scattering (SAXS) of an organo-clay/butyl rubber nano-composition.

FIG. 4 shows 2-dimensional image of small angle x-ray scattering of the organo-clay/butyl rubber nano-composition.

Figures 1-4 show the small-angel x-ray scattering patterns measured when ionic liquid surfactant treated mica and organo-clay/butyl rubber nano-composition according to the present invention were irradiated with x-ray. The scattering of x-ray from these samples was caused by the difference of the electron densities in clay layers, surfactants and/or butyl rubber molecules. The scattering patterns were formed by the interference of secondary waves that were emitted from clay layers, surfactants and/or butyl rubber molecules. The result.of SAXS is essentially the intensity of the Fourier transform of the electron density and reflects the microstructures of the sample. In accord with Bragg's law, structural parameters of the sample, such as distance between clay layers, can be calculated from the peak positions and intensities.

FIG. 5 shows the changing of torque as a function of cure time for an organo-clay treated rubber in an embodiment.

FIG. 6 shows the wide angle X-ray diffractions (XRD) of four samples in one embodiment of the invention. The four samples are MAE powder, MAE treated Exxpro rubber, MAE treated Exxpro rubber modified with triallylamine, and MAE treated Exxpro rubber modified with tributylamine.

FIG. 7 shows the small angle X-ray scatterings (SAXS) of three samples in one embodiment of the invention. The three samples are MAE powder, MAE treated Exxpro rubber, MAE treated Exxpro rubber modified with triallylamine,

and MAE treated Exxpro rubber modified with tributylamine.

## DETAILED DESCRIPTION OF ILLUSTRATIVE EMBODIMENTS

The present invention provides tire product comprising a nano-composite according to claim 1 comprising (a) a cationic mediator comprised of a hydrophobic unit and a cationic unit, and (b) a clay, (c) a carbon-chain or a heterochain polymer, wherein the clay is intercalated and/or exfoliated by the cationic mediator and said polymer. The nano-composites of the invention may include, but are not limited to, those commonly known as organo-clay.

The term "cationic mediator" used herein describes a chemical species able to effectively mediate, or compatiblize, immiscible organic polymer and inorganic layered material such as clay, into a relatively homogenous state without phase separation. Generally, the mediator facilitates the intercalation of organic polymer between the layers of the layered material.

The cationic mediator comprises at least one cationic unit, which typically is also hydrophilic, that can bind to the layers of inorganic layered material with effectively higher affinity than to an organic, and typically also hydrophobic material, such as butyl rubber. While a cationic mediator typically binds to an inorganic layered material by hydrophilic interaction or ionic bond, it can also bind or link to an organic material through a variety of physical and chemical forces such as hydrophobic interaction, covalent bonds, $\pi$-$\pi$ stacking interaction, lock-key type interaction, hydrogen bonds, and coordination bonds etc. Accordingly, a cationic mediator of the present invention comprises, in addition to the "at least one cationic unit", an organic binding unit, for example, a sufficiently long alkyl chain, or a covalently bonded polymeric group etc.

The cationic unit may be monoatomic or polyatomic, and bears one or more elementary charges of the proton, i.e. positive charges. Depending upon the specific structure of the cationic mediator, such as the presence or absence of a conjugated system and whether the cationic unit includes the conjugated system, the positive charge(s) can be either localized or delocalized. The cationic mediator can be accompanied by negatively charged species to balance its positive charge and neutralize the overall charge of the system. Although the negatively charged species is typically independent, e.g. a counter ion(s), it is also feasible that the negatively charged species is part of the cationic mediator, by which an inner salt is formed. In various embodiments, the counter ion of the cationic mediators may also be those negatively charged groups of the layers in the layered material, for example, after the cationic mediator has exchanged cation of the layered material by intercalating in between the layers.

Exemplary counter ions of the cationic mediator of the invention may include, but are not limited to, simple anions such as $Cl^-$, $Br^-$, $F^-$, $I^-$, $O^{2-}$, $S^{2-}$, $Se^{2-}$, $Te^{2-}$, $N^{3-}$, $As^{3-}$, and the like; and polyatomic anions such as $BF_4^-$, $PF_6^-$, $CO_3^{2-}$, $HCO_3^-$, $SO_4^{2-}$, $CF_3SO_3^-$, $SO_3^{2-}$, $S_2O_3^2$, $HSO_4^-$, $H_2PO_4^-$, $HPO_4^{2-}$, $PO_4^{3-}$, $NO_2^-$, $NO_3^-$, $C_2O_4^{2-}$, $C_2H_3O_2^-$, $OH^-$, $O_2^{2-}$, $N_3^-$, $CrO_4^{2-}$, $Cr_2O_7^{2-}$, $BO_3^3$-, Mn04 , $As0_4^{3-}$, $SCN^-$, $CN^-$, $CNO^-$, $ClO^-$, $ClO_2^-$, $ClO_3^-$, $ClO_4^-$, $BrO^-$, $BrO_2^-$, $BrO_3^-$, $BrO_4^-$, $IO^-$, $IO_2^-$, $IO_3^-$, $IO_4^-$, and the like.

As will be fully described, the exemplary cationic mediator of the invention may be broadly divided into four representative categories, as shown in the following table.

Cationic Mediator Categories

| Category | Cationic Mediator | |
|---|---|---|
| | Cationic Unit | Hydrophobic Unit |
| I | Heterocyclic Cation | $C_{\geq 4}$ Hydrocarbon |
| II | Heterocyclic Cation | Polymeric Group |
| III | Formula B-I~XIII Onium | $C_{\geq 4}$ Hydrocarbon |
| IV | Formula B-I~XIII Onium | Polymeric Group |

Cationic mediators of Category I may be prepared by reacting halogenated C≥4 hydrocarbons such as octyl chloride and hexadecyl chloride with heterocyclic cation precursors such as 1-methylimidazol and 1-benzylimidazole; cationic mediators of Category II may be prepared by reacting halogenated polymers with heterocyclic cation precursors such as 1-methylimidazol and 1-benzylimidazole; cationic mediators of Category III may be prepared by reacting halogenated C≥4 hydrocarbons such as octyl chloride and hexadecyl chloride with Formula B-I~XIII (described hereinbelow) onium precursors such as tributyl amine or triallyl amine; and cationic mediators of Category IV may be prepared by reacting a halogenated polymer with Formula B-I~XIII onium precursors such as tributyl amine or triallyl amine. Typically, the preparation of these cationic mediators is conducted at elevated temperature, such as above about 40°C.

**Nano-composite Including Category I Cationic Mediator**

The nano-composite can comprise (a) a cationic mediator comprised of a C≥4 hydrocarbon as the hydrophobic unit and a heterocyclic cation as the cationic unit, and (b) a clay, wherein the clay is intercalated and/or exfoliated by the cationic mediator. Preferably, the clay will be sufficiently exfoliated to provide an average gap greater than about 0.1 nm between layers.

Exemplary heterocyclic cations of the present invention may include, but are not limited to, imidazolium, 1-alkylimidazolium, 1,3-dialkylimidazolium, 1-arylalkylimidazolium, 1-arylalky-3-alkyl-limidazolium, 1,3-diarylalkylimidazolium, benzimidazolium, imidazolinium, pyridinium, piperidinium, pyrazinium, piperazinium, pyrrolium, pyrrolidinium, pyrazolium, diazolium, triazolium, pyridazinium, tetrazolium, amidinium, guanidinium, oxazolium, oxadiazolium, oxatriazolium, thiazolium, thiadiazolium, thiatriazolium, quaternary pyrazolidine, quaternary pyrrolidones, indolium, isoindolium, quinolinium, isoquinolinium, quinazolinium, quinoxalinium, derivates thereof, and mixture thereof.

The symbol C≥4 denotes "containing no less than 4 carbon atoms". For example, the C≥4 hydrocarbon of the present invention may be any saturated or unsaturated, substituted or unsubstituted, straight or branched, cyclic or acyclic $C_4$-$C_{50}$ alkyl group.

Exemplary C≥4 hydrocarbon groups in the cationic mediator include, but are not limited to, butyl, isobutyl, behenyl, palmitoleyl, oleyl, linoleyl, linelenyl, erucyl, capryl, tallow, n-pentyl, any isopentyl, n-hexyl, any isohexyl, n-heptyl, any isoheptyl, n-octyl, any isooctyl, n-nonyl, any isononyl, n-decyl, any isodecyl, n-undecyl, any isoundecyl, n-dodecyl or lauryl, any isododecyl, n-tridecyl, any isotridecyl, n-tetradecyl, myristyl, any isotetradecyl, n-pentadecyl, any isopentadecyl, n-hexadecyl or cetyl, palmityl, any isohexadecyl, n-heptadecyl, any isoheptadecyl, n-octadecyl, stearyl, any isooctadecyl, n-nonadecyl, any isononadecyl, n-eicosyl, any isoeicosyl, n-henicosyl, any isohenicosyl, n-docosyl, any isodocosyl, n-tricosyl, any isotricosyl, n-tetracosyl, any isotetracosyl, n-pentacosyl, any isopentacosyl, n-hexacosyl, any isohexacosyl, n-heptacosyl, any isoheptacosyl, n-octacosyl, any isooctacosyl, n-nonacosyl, any isononacosyl, n-triacontyl, any isotriacontyl, n-hentriacontyl, any isohentriacontyl, n-dotriacontyl, any isodotriacontyl, n-tritriacontyl, any isotritriacontyl, n-tetratriacontyl, any isotetratriacontyl, n-pentatriacontyl, any isopentatriacontyl, n-hexatriacontyl, any isohexatriacontyl, n-heptatriacontyl, any isoheptatriacontyl, n-octatriacontyl, any isooctatriacontyl, n-nonatriacontyl, any isononatriacontyl, n-tetracontyl, any isotetracontyl, n-hentetracontyl, any isohentetracontyl, n-dotetracontyl, any isodotetracontyl, n-tritetracontyl, any isotritetracontyl, n-tetratetracontyl, any isotetratetracontyl, n-pentatetracontyl, any isopentatetracontyl, n-hexatetracontyl, any isohexatetracontyl, n-heptatetracontyl, any isoheptatetracontyl, n-octatetracontyl, any isooctatetracontyl, n-nonatetracontyl, any isononatetracontyl, n-pentacontyl, isopentacontyl and mixtures thereof.

In a specific embodiment, the heterocyclic cation comprises an imidazolium. For example, a Category I cationic mediator may have the formula (I) as shown below.

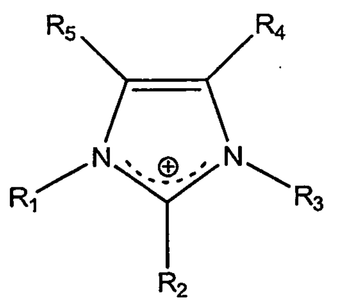

(I)

in which at least one of $R_1$, $R_2$, $R_3$, $R_4$, and $R_5$ may be the C≥4 hydrocarbon group as defined above, or, if not all of $R_1$, $R_2$, $R_3$, $R_4$, and $R_5$ a re the C≥4 hydrocarbon group as defined above, then up to four of $R_1$, $R_2$, $R_3$, $R_4$, and $R_5$ can be independently of each other selected from hydrogen, methyl, ethyl, vinyl, allyl, propyl, isopropyl, or aryl-containing or hetaryl-containing group. As used herein, the terms "aryl" and "hetaryl" are intended to embrace monocyclic or polycyclic aromatic hydrocarbon and heterocyclic groups. Examples of aralkyl and alkylaralkyl groups include, but are not limited to, benzyl, benzhydryl, tolylmethyl, trityl, cinnamyl, phenethyl, styryl, phenylbutyl, neophyl, and the like. Examples of aryl and alkylaryl groups include, but are not limited to, phenyl, biphenyl, tolyl, xylyl, mesityl, cumenyl, di(t-butyl)phenyl, anthryl, indenyl, naphthyl, and the like. Haloaryl and haloaralkyl groups are aryl and aralkyl groups which have been substituted with one or more halo groups. Examples of such groups include, but are not limited to, halobenzyl (e.g., fluorobenzyl, chlorobenzyl, bromobenzyl, or iodobenzyl, whether ortho-, meta-, or para-substituted), dihalobenzyl, trihalobenzyl, tetrahalobenzyl, pentahalobenzyl, halophenyl (e.g., fluorophenyl, chlorophenyl, bromophenyl, or iodophenyl, whether ortho-, meta-, or para-substituted), dihalophenyl, trihalophenyl, tetrahalophenyl, and pentahalophenyl and mixtures thereof.

Specific examples of other aryl-containing and hetaryl-containing groups are phenoxy, tolyloxy, xylyloxy, mesityloxy, and cumenyloxy; biphenyl, anilino, toluidino, tosyl, allyl-benzyl or -phenyl, furyl, pyridyl, 2-pyridyl (pyridin-2-yl), indol-1-yl, chloromethyl-benzyl or -phenyl, trifluoromethyl-benzyl or -phenyl, hydroxy-benzyl or-phenyl, methoxy-benzyl or -phenyl, ethoxy-benzyl or -phenyl, methoxyethoxy-benzyl or -phenyl, allyloxy-benzyl or -phenyl, phenoxy-benzyl or -phenyl, acetoxy-benzyl or - phenyl, benzoyloxy-benzyl or-phenyl, methylthio-benzyl or -phenyl, phenylthio-benzyl or -phenyl, tolylthio-benzyl or -phenyl, methylamino-benzyl or -phenyl, dimethylaminobenzyl or -phenyl, ethylamino-benzyl or -phenyl, diethylamino-benzyl or -phenyl, acetylamino-benzyl or -phenyl, carboxy-benzyl or -phenyl, methoxycarbonyl-benzyl or-phenyl, ethoxycarbonyl-benzyl or -phenyl, phenoxycarbonyl-benzyl or -phenyl, chlorophenoxycarbonyl-benzyl or -phenyl, N-cyclohexylcarbamoyloxy-benzyl or - phenyl, allyloxycarbonyl-benzyl or -phenyl, carbamoyl-benzyl or -phenyl, N-methylcarbamoyl-benzyl or -phenyl, N,N-dipropylcarbamoyl-benzyl or -phenyl, N-phenylcarbamoyl-benzyl or -phenyl, nitro-benzyl or -phenyl, cyano-benzyl or -phenyl, sulfo-benzyl or -phenyl, sulfonato-benzyl or -phenyl, phosphono-benzyl or -phenyl, phosphonato-benzyl or -phenyl groups, and morpholino-benzyl or -phenyl and mixtures thereof.

In an exemplary Formula (I) cationic mediator, $R_2$, $R_4$, and $R_5$ may all be H, and at least one of $R_1$ and $R_3$ is the C≥4 hydrocarbon group as defined above.

In specific embodiments, the Category I cationic mediator is selected from one of the following with a halide such as chloride as their counter ion.

(II)

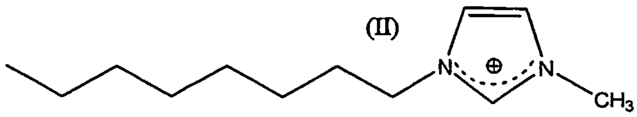

(III)

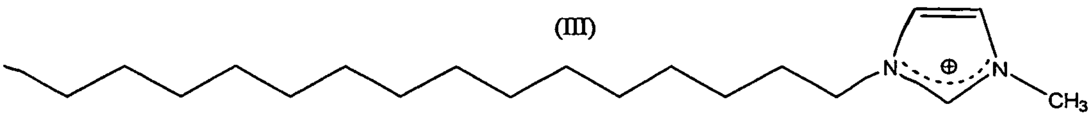

(IV)

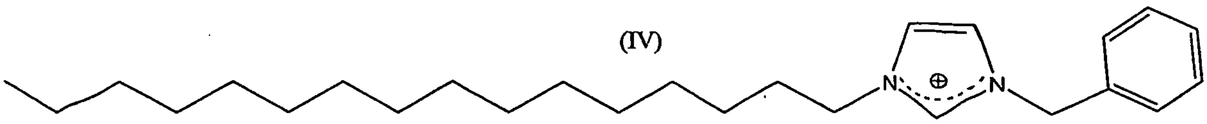

**Nano-composite Including Category II Cationic Mediator**

The present invention provides a nano-composite comprising (a) a cationic mediator comprised of a polymeric group as the hydrophobic unit and a heterocyclic cation as the cationic unit, and (b) a clay, wherein the clay is intercalated and/or exfoliated by the cationic mediator. The Category II heterocyclic cation can be selected from those described under Category I.

The hydrophobic unit, for example, may comprise any commonly used ionic polymers or polymeric surfactants. However, preferred polymeric groups include polymers that can intercalate between clay layers more effectively with than without the aid of the cationic mediator. Conveniently defined by its backbone structure, the polymeric group can have a saturated or unsaturated polyvinyl-type (i.e., carbon-chain) backbone, such as polychloroprene, polyethylene, isobutene-isoprene rubber (butyl rubber, IIR), halogenated butyl rubber (HIIR) such as CIIR and BrIIR, neoprene rubber, nitrile rubber (NBR), 1,2-polybutadiene, polyallene, polybutadiene (butadiene rubber, BR), polyisobutylene (PIB), polyisoprene, 3,4-polyisoprene, poly(methyl acrylate), poly(methyl vinyl ketone), ethylene-propylene elastomer, polystyrene (PS), polyacrylamide, poly(acrylamide oxime), polypropylene (PP), styrene-butadiene rubber (SBR), poly(methyl methacrylate), acrylonitrile-butadiene-styrene terpolymer (ABS), poly(vinyl chloride) (PVC), poly(vinylidene chloride), poly (vinyl pyridine), poly(vinyl pyrrolidone), poly(acrylic anhydride), polyacrylonitrile, Exxpro™ elastomers (brominated isobutylene p-methylstyrene copolymer, Exxon Chemical, TX, USA), styren e-acrylonitrile copolymer (SAN), ethylene-vinyl acetate copolymer (EVA), and the like.

The polymeric group can also possess one or more functional groups such as carbonyl, or a non-carbon element such as N, S or O etc. (i.e. heterochain polymer). Exemplary heterochain polymers include, but are not limited to, polyether such as poly(oxyethylene), polyformaldehyde, poly(phenylene oxide) or polyacetaldehyde; polyacrolein, polysulfide, polysulfone, poly(alkylene polysulfide), polyester, polycarbonate, polyphosphate ester, polyamide, polyurea, polyurethane, heterocyclic polymer, polyhydrazides, polyimide, melamine-formaldehyde resin (MF), polysaccharides, phenol-formaldehyde resin (PF), and polyanhydride etc. In a specific embodiment, the polymeric group has a polyether backbone such as poly(oxyethylene), polyformadehyde, poly(phenylene oxide), or polyacetaldehyde etc.

The polymeric group may be linear, branched, networked, comb, star, ladder, dendrimer, etc. The polymeric

group may also be a copolymer such as block copolymer, graft copolymer, statistical copolymer, random copolymer, periodic copolymer, or alternating copolymer etc. Similarly, terpolymers, tetrapolymers could comprise the polymeric group. In a specific embodiment, the polymeric group comprises a polyether, a butyl rubber, or an isobutylene p-methylstyrene copolymer.

The cationic unit may be linked to the polymeric group at a terminal or non-terminal position of its backbone. "Linked" generally means A and B can be directly bonded like A-B, or bridged by methylene, ethylene etc., like A-$CH_2$-B, or A-$CH_2$-$CH_2$-B etc. For illustration, a polyether can have one of the formulas shown below, in which n, x, y, and z are integral numbers; and solid the ball represents a heterocyclic cation such as alkylimidazolium:

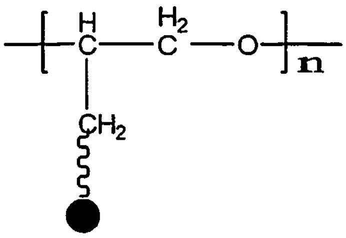
;

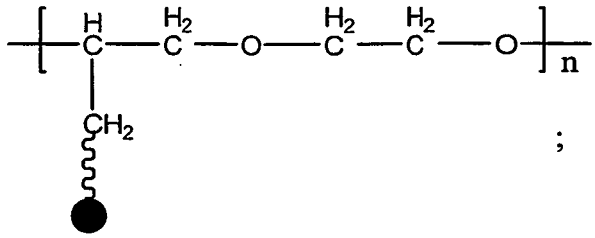
;

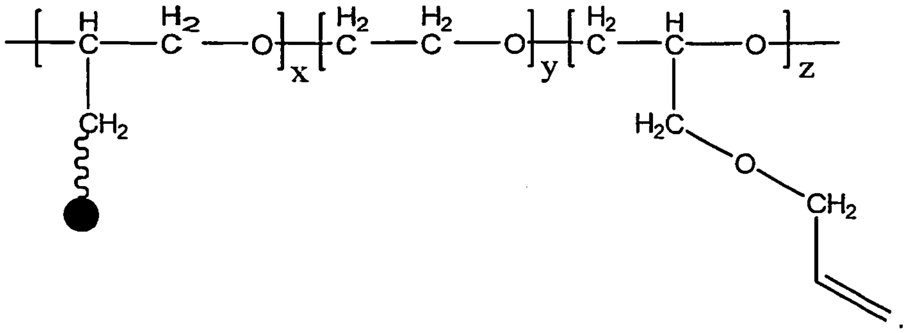
.

In a specific embodiment, the polymeric group comprises a polyether and the cationic unit comprises an imidazolium derivative such as 1-($C_1$-$C_6$)alkylimidazolium or 1-($C_1$-$C_6$)alkyl-3-($C_1$-$C_6$)alkylimidazolium in which the $C_1$-$C_6$ reference means alkyl groups having 1 to 6 carbon atoms, such as, 1-methylimidazolium having the formula as specified below with a halide such as chloride as the counter ion:

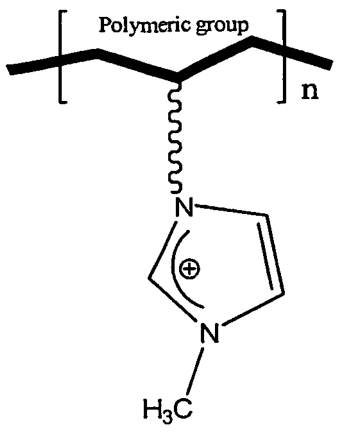
.

The polymeric group backbone and the cationic unit may be optionally connected via a linker group. O ne end of the linker group can connect to any suitable position in the polymeric group backbone, while the other end can connect to any suitable position in the cationic unit. Exemplary linker groups include, but are not limited to, linear or branched ($C_1$-$C_6$)alkylene and linear or branched ($C_1$-$C_6$)oxyalkylene etc. The stereochemistry, due to the pendant cationic unit (s) may be isotactic, syndiotactic, or atactic. However, it should be understood that sometimes the entire or partial linker group can be named as part of the cationic unit, and sometimes part of the cationic unit can be named as linker group or part of linker group. Both of these cases are within the scope of the present invention. For example, the pendant cationic unit of the following structure can be described as 1-methylimidazolium with a methylene linker, or a 1,3-dimethylimidazolium without any linker group (i.e. via direct bond).

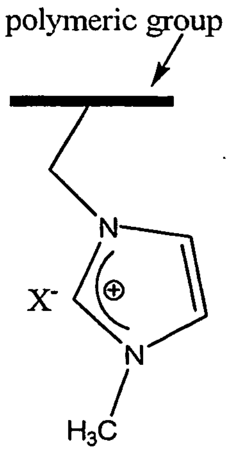


such as

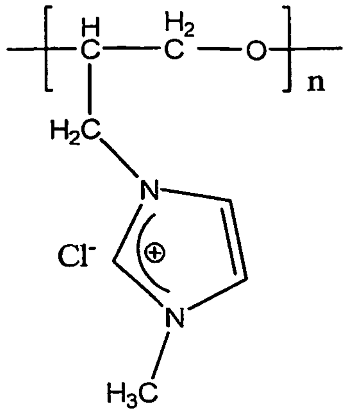

The cationic mediator may be prepared from any appropriate monomers comprising the cationic unit or cationic unit precursors by a conventional polymerization reaction such as step-reaction polymerization or polycondensation, cationic polymerization, anionic polymerization, complex coordinative polymerization, or free radical chain polymerization. Taking polyethers as a specific example, they can be produced from monomers such as ethylene oxide through ring-opening polymerization in the presence of acid or base catalyst, or from carbonyl compounds such as appropriate aldehydes and ketones through chain polymerization.

Alternatively, the cationic mediator may be prepared from an intermediate polymer by modifying the intermediate polymer with suitable chemical reagents which introduce at least one cationic unit into the structure.

The cationic mediator may be prepared from a halogenated polymer. Exemplary halogenated polymers include, but are not limited to, brominated butyl rubber, chlorinated butyl rubber, brominated substance of isobutylene-paramethylstyrene copolymer, chloroprene rubber, or hydrin rubber. Introduction of halo-groups into suitable polymers may be achieved by any appropriate halogenation reactions such as chlorination and bromination reactions. Exemplary halogenated polymers, wherein n, x, y, and z are all integral numbers include:

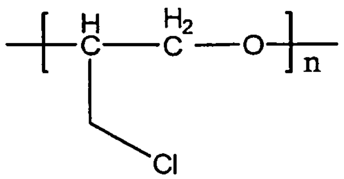

;

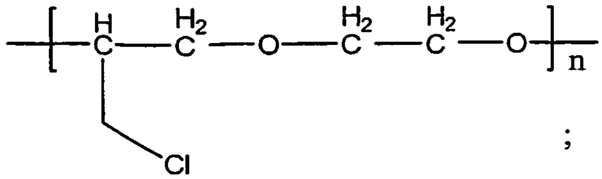

;

or

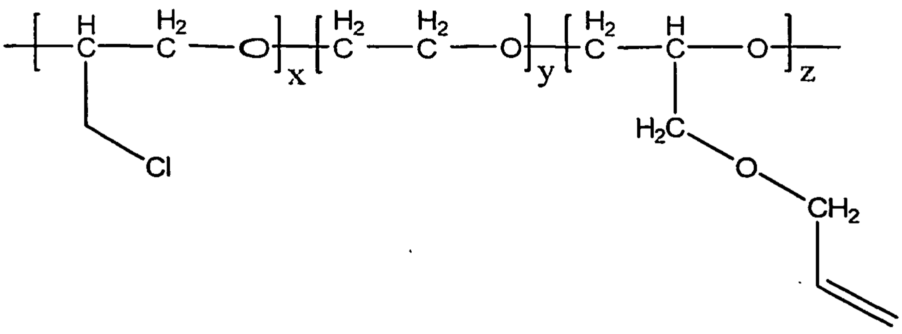

;

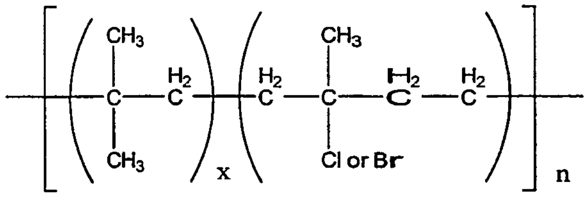

; or

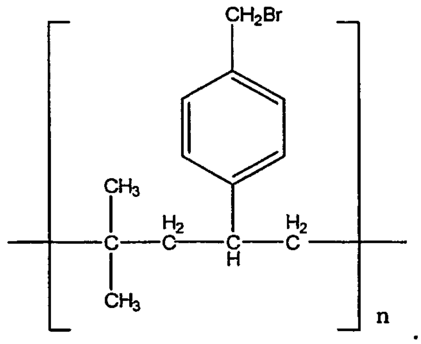

Further, the halo-groups such as Cl and Br can be directly or indirectly converted to cationic units. Alternatively, an already halogen-containing polymer can be used to react with suitable cationic unit precursor reagents under appropriate conditions to produce the ionic po lymer of the present invention. Exemplary precursor reagents include, but are not limited to, 1-methylimidazole, 1-benzolimodazole, and mixture thereof. More particularly, the cationic mediator can be prepared by reacting the halogenated polymer with 1-($C_1$-$C_6$)alkylimidazole such as 1-methylimidazole.

In one exemplary embodiment, a polyether product with pedant 1-methylimidazolium cation(s) is produced by condensing a halogenated polymer such as polyepichlorohydrin with 1-methylimidazole at elevated temperature, preferably above 50°C, more preferably above 70 °C, and most preferably above 80 °C.

Due to the accessibility of the polyepichlorohydrin chloro group to the 1-methylimidazole, not necessarily all of the chloro groups are converted to 1-methylimidazolium. Preferably, the conversion is at least 30%, more preferably at least 50%, and most preferably at least 80%. Without being bound by theory, the reaction is believed to occur in a mechanism as illustrated below.

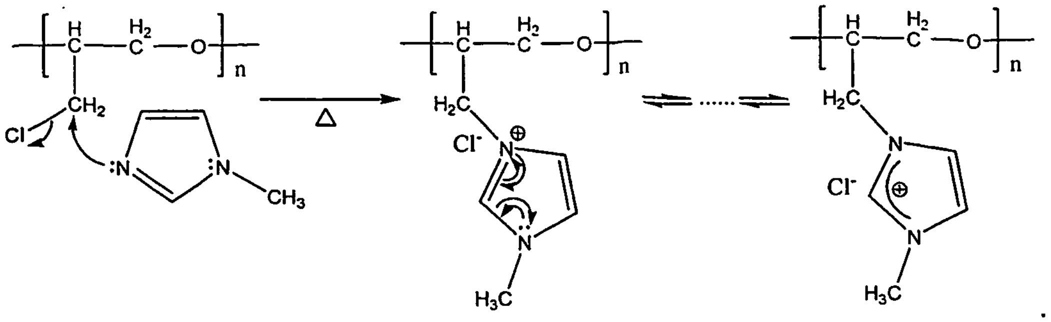


In preparing some of the cationic mediators under Categories I and II, some reagents may be used as the heterocyclic cation precursors. Examples of such precursors include, but are not limited to, imidazole, 1-methylimidazole, 1-benzylimidazole, the derivatives thereof, and the mixtu res thereof. Advantageously, several of these are environmentally friendly green solvents.

In an embodiment, the cationic mediator of Category I may be prepared by reacting a C≥4 hydrocarbonyl halide with 1-methylimidazol or 1-benzylimidazole. Suitable C≥4 hydrocarbonyl halide for this purpose may be octyl chloride or hexadecyl chloride or mixtures thereof.

For example, cationic mediators of formulas (II) and can be formed by mixing octyl chloride or hexadecyl chloride with 1-methylimidazol at elevated temperatures, such as between about 23°C to about 500°C, preferably between about 50°C and about 180°C, more preferably between about 75°C and about 100°C. A significant benefit is therefore the reduction, if not elimination, of ha rmful VOC emissions. Accordingly, certain of the cationic mediators disclosed herein can be used as a general-purpose surfactant, in addition to a clay exfoliating agent.

The cationic mediators can be used to exfoliate a layered material and form useful products such as a nanocomposite, or organo-clay, or exfoliated clay. The ratio between clay and cationic mediator can be by weight from 30:70 to 70:30, preferably from 40:60 to 60:40. At least 30% (wt), preferably at least 60%(wt) of the clay is exfoliated by the cationic mediator. Preferably, the exfoliated clay will have an average between-layer gap greater than about 0.1 nm, preferably greater than 1.0 nm, and more preferably greater than about 3.0 nm.

"Layered material" means an inorganic material that is in the form of a plurality of adjacent bound layers or plates. Layered materials are those that can give at least one of the cationic mediators access to their interlayer spaces through exchanging, partially or completely, cations with cationic mediators, a pro cess called intercalation. In many

cases, the layered material is clay, which typically comprises an inorganic phase having layered materials in plates or other shapes with a significantly high aspect ratio. The aspect ratio is defined as the ratio of the largest and smallest dimension of the clay particles.

Exemplary clays include, but are not limited to, synthetic mica; smectites such as montmorillonite (Bentonite), sodium montmorillonite, magnesium montmorillonite, calcium montmorillonite, beidellite, nontronite, hectorite, sodium hectorite, saponite, synthetic saponite, and sauconite; pyrophyllite; glauconites; vermiculites; polygorskines; sepiolites; allophanes; imogolites; talc; mica; fluoro-mica; illites; glauconite; phyllosilicates; volkonskoite; sobockite; stevensite; svinfordite; magadiite; kenyaite; kaolinite; dickite; nacrite; anauxite; ledikite; montronite; silicate; halloysite; metahalloysite; sericite; allophone; serpentine clays; chrysotile; antigorite; attapulgite; sepiolite; palygorskite; Kibushi clay; gairome clay; hisingerite; chlorite; and mixtures thereof.

The method of exfoliating a clay comprises mixing into the clay a sufficient amount of a cationic mediator as illustrated above.

Typical clays have a layered structure with a gap of about 0.1 nm between each layer and cations such as $K^+$ and $Na^+$ on the surface of each layer. The cations are attached by an ionic interaction with the negatively charged surface of the clay layers, and create a net neutral charge between clay layers.

In the exfoliation procedure, optionally, a clay may be first swelled by placing it in water. Swelling takes place because the cations of the clay become solubilized in the water, leaving adjacent negatively charged clay layers. The adjacent clay layers are repulsed by their similar negative charges, resulting in gaps between the layers. A cationic mediator may then be added to the swollen clay to form an organo-clay or nano-composite. Alternatively, before addition of the cationic mediator, the clay may be pre-exfoliated with a cationic surfactant such as an ammonium salt. In some embodiments, if an ionic liquid is used, the clay may be directly mixed with the cationic mediator. The cationic mediator is attracted to the negatively charged surface of the clay, keeping the swelling state stable and forming gaps of about 5-10 nm between the layers.

Additional non-polar polymer, such as rubber, can further separate the layers of the clay, because the added polymer and the cationic mediator can attract each other at, e.g., their hydrophobic portions, and the added polymer will also penetrate between the clay layers. The large molecule size of the cationic mediator and/or the added polymer may counteract any remaining Van der Waals interactions between the clay layers and the clay can be fully exfoliated, i.e. separated into discrete layers.

The present invention provides a composition according to claim 1 comprising (a) a cationic mediator comprised of a hydrophobic unit and a cationic unit, (b) a clay, and (c) a carbon-chain or a heterochain polymer, wherein said clay is exfoliated or intercalated by said cationic mediator and said polymer.

There is no specific limitation on suitable polymers. However, preferred polymers are those that can intercalate between clay layers more effectively with than without the aid of the cationic mediator as demonstrated above. The polymer can have a saturated or unsaturated polyvinyl-type (i.e., carbon-chain) backbone, such as polychloroprene, polyethylene, isobutene-isoprene rubber (butyl rubber, IIR), halogenated butyl rubber (HIIR) such as CIIR and BrIIR, neoprene rubber, nitrile rubber (NBR), 1,2-polybutadiene, polyallene, polybutadiene (butadiene rubber, BR), polyisobutylene (PIB), polyisoprene, 3,4-polyisoprene, poly(methyl acrylate), poly(methyl vinyl ketone), ethylene-propylene elastomer, polystyrene (PS), polyacrylamide, poly(acrylamide oxime), polypropylene (PP), styrene-butadiene rubber (SBR), poly(methyl methacrylate), acrylonitrile-butadiene-styrene terpolymer (ABS), poly(vinyl chloride) (PVC), poly(vinylidene chloride), poly(vinyl pyridine), poly(vinyl pyrrolidone), poly(acrylic anhydride), polyacrylonitrile, styrene-acrylonitrile copolymer (SAN), ethylene-vinyl acetate copolymer (EVA), and the like. In one embodiment, the nano-composite comprises between about 3% and about 70% by weight based on the total weight of the rubber formulation. Tire manufacture is one application which may benefit from the compositions.

The polymer can also possess a backbone with one or more functional groups such as carbonyl, or a non-carbon element such as N, S or O etc. (i.e. heterochain polymer). Exemplary heterochain polymers include, but are not limited to, polyether such as poly(oxyethylene), polyformadehyde, poly(phenylene oxide) or polyacetaldehyde; polyacrolein, polysulfide, polysulfone, poly(alkylene polysulfide), polyester, polycarbonate, polyphosphate ester, polyamide, polyurea, polyurethane, heterocyclic polymer, polyhydrazides, polyimide, melamine-formaldehyde resin (MF), polysaccharides, phenol-formaldehyde resin (PF), and polyanhydride etc. The polymeric group can also be an inorganic or inorganic/organic polymer such as polysiloxane, polysilane, carborane polymer, and organometallic polymer etc.

An organo-clay (nano-composite) can be dispersed into a rubber such as butyl rubber. The rubber so formulated has lower gas permeability without incurring a negative effect on the cure properties associated with traditional clay/surfactant systems. Optionally, prior to dispersing the organo-clay in the rubber, the organo-clay may be washed and dried. Preferably, the organo-clay is washed with an alcohol, such as, but not limited to, isopropanol, water or mixtures thereof.

In a rubber formulation, additional stabilizers, antioxidants, conventional fillers, processing aids, accelerators, extenders, curing agents, reinforcing agents, reinforcing resins, pigments, fragrances, and the like can optionally be added. Specific examples of useful antioxidants and stabilizers include 2-(2'-hydroxy-5'-methylphenyl) benzotriazole,

nickel di-butyl-di-thiocarbamate, tris(nonylphenyl) phosphite, 2,6-di-t-butyl-4-methylphenol, and the like. Exemplary fillers and pigments include silica, carbon black, titanium dioxide, iron oxide, and the like. Suitable reinforcing materials are inorganic or organic products of high molecular weight. Examples include glass fibers, asbestos, boron fibers, carbon and graphite fibers, whiskers, quartz and silica fibers, ceramic fibers, metal fibers, natural organic fibers, and synthetic organic fibers.

As one exemplary benefit of the present invention, good cure properties and low gas permeability can both be achieved for some rubber formulations. Exemplary rubbers suitable to the present invention include, but not limited to, butyl rubber, BR, Hcis BR, SBR, NR and so on. As used herein, the butyl rubber composition may include isobutylene, halobutyl rubber, and copolymers of isobutylene and one or more additional monomers, such as isoprene, styrene, butadiene, and mixtures thereof. Tensile strength, gas permeability, and cure properties including cure capability and cure time etc. have been improved in various rubber compounds by using the nano-composite of the present invention. The butyl rubber composition is useful in the formation of inner liners for automobile tires and in applications requiring good damping characteristics, such as engine mounts. Other uses for the butyl rubber include use in air cushions, pneumatic springs, air bellows, accumulator bags, tire-curing bladders, high temperature service hoses, and conveyor belts for handling hot materials.

The nano-composite can be incorporated into butyl rubber by any method known to a skilled artisan, for example, wet/solvent method or a dry mixing method under mild mixing conditions. Such mild mixing conditions are similar to those normally used in butyl rubber mixing. The mixing may be accomplished, for example, by using any integral mixing device such as a Brabender mixer, a twinscrew extruder or a kneader, at a mixing rate of from about 20 to about 200 rpm, at a temperature of about 25°C to about 250°C for a period of about 3~30 minutes. The mixing conditions for example include mixing in a Brabender mixer at about 60 rpm at a temperature of about 70°C for about three minutes. Of course, the organo-clay can be added according to any other method known by the skilled artisan. It is preferred that between about 1 and about 70%, more preferably, between about 3 and about 40% by weight of organo-clay or nano-composite is incorporated into the butyl rubber. Preferably, the clay in the final product is at least about 50% exfoliated, more preferably at least about 70% exfoliated.

## EXAMPLES

### Example 1: Cationic Mediator of Formula (II), a Liquid Surfactant

654g of 1-choloroctane (Aldrich) and 360g of 1-methylimidazal (Aldrich) were added into a 2000 mL tri-neck round-bottom flask. A refluxing/cooling column was installed on the right neck. A thermometer was installed on the left neck. To the middle neck was connected a nitrogen purging tube that delivered the nitrogen gas below the liquid phase. The reactants were mixed with vigorous stirring using magnetic agitation at a temperature between 75 and 80°C. After 8 hours, the solution in the flask turned into a milk-like mixture. After two days, the mixture in the flask turned homogenous again. The reaction was continued for three days. Then, the product was washed with ethyl acetate five times and toluene three times. Thereafter, it was dried in vacuum for three days.

### Example 2: Cationic Mediator of Formula (III), a Liquid Surfactant

The procedure of Example 1 was repeated with minor changes. 868g of 1-cholorohexadecane (Aldrich) and 570g of 1-methylimidazal (Aldrich) were added into a 2000 mL tri-neck round-bottom flask. The reaction temperature was set to 95 to 100°C. After four hours, the milk-like solution transformed into a homogenous solution. The reaction was continued for three days. The post-treatment was the same as Example 1.

### Example 3: Organo-Mica

60g of the product from Example 1, 40g of ME-100 (Coop Chemicals, Tokyo, Japan), and 800g of deionized water were mixed together and shaken for about 16 hours. The organo-treated mica was collected through vacuum-filtration. The treated mica was further washed with isopropenol three times, and was then dried in vacuum. The clay contained 28.77% of organo-matter (i.e., the surfactant), as measured by thermo-gravity analysis (TGA). TGA was carried out on equipment manufactured by TA Instruments and Perkin Elmer, among others.

### Example 4: Organo-Mica

80g of the product from Example 2, 40g of ME-100 (Coop Chemicals), and 800g of deionized water were mixed together and shaken for about 16 hours. The organo-treated mica was collected through vacuum-filtration. The treated mica was further washed with isopropanol three times, and was then dried in vacuum. TGA was conducted in the same

manner as Example 3, and the result showed that the clay contained 31.71 % of organo-matter (i.e., the surfactant).

The products were checked using small angle X-ray scattering (SAXS). Fig. 1 and Fig. 2 show the SAXS result of the mica treated with ionic liquid surfactant of formula (III). Based on the scattering intensity profile between 2θ≈ 1.0 and 2θ≈ 10.0 of scattering angles, particularly the 2θ≈ 2.2 peak and the 2θ≈ 4.2 triplet peaks, calculation indicates that the mica has been intercalated by the ionic liquid surfactant, and the distances between the mica layers are approximately in the range of 30 - 40 Å

**Examples 5-11: Bromobutyl Rubber Testing**

Seven bromobutyl rubber compounds were prepared according to the formulation shown in Table 1 and Table 2. The bromobutyl rubber is commercially available as Bayer XG124 Bromobutyl, BIIR. In each example, a blend of the ingredients was kneaded by the method listed in Table 3. The physical characteristics of the compositions of Examples 5-11 are shown in Table 4. Testing of the cure characteristics of rubber compounds follow the guidelines of, but were not be restricted to, ASTM-D 2084. A Monsanto Moving Die Rheometer (MDR 2000) was used to measure the cure characteristics of compounded rubbers. Cure capability ($S_{max}$ - $S_{min}$) is defined as the difference between the maximum torque and the minimum torque 90% cure time at 165°C is defined as the time required to achieve 90% cure capability. Measurement of gas permeability was conducted by using 1 mm thick sheets according to ASTM-D1434. The gas permeability index (GPI) value was calculated according to the formula: $\mathrm{GPI} = \frac{P_c}{P_p}$ where $P_c$ = permeability of the nanocomposite and $P_p$ = the permeability of the polymer. Shore A Hardness at 23°C, defined as relative resistance of the rubber surface to small deformations, was measured by using a Durometer following ASTM-D2240.

Table 1

| | Organo-clay used | Amount of organo-clay (g) | Amount of ionic liquid surfactant in organo-clay (g) | Amount of bromobutyl rubber (g) |
|---|---|---|---|---|
| Example 5 | Example 3 | 11.14 | 2.89 | 43.86 |
| Example 6 | Example 3 | 18.56 | 4.81 | 36.44 |
| Example 7 | Example 4 | 12.5 | 4.25 | 42.49 |
| Example 8 | Example 4 | 20.85 | 7.1 | 34.15 |
| Example 9 (Control 1) | ME-100 | 8.25 | 0 | 46.75 |
| Example 10 (Control 2) | ME-100 | 13.75 | 0 | 41.25 |
| Example 11 (Control 3) | No | 0 | 0 | 55 |

Table 2. Final Batch Formulation (for Examples 5 to 11, by parts)

| | |
|---|---|
| Stearic Acid | 0.50 |
| Sulfur | 0.60 |
| Zinc Oxide | 0.45 |
| Altax-MBTS (Accelerator) | 0.75 |

Table 3. Mixing Conditions

Mixer: 60g Brabender Agitation Speed: 60 rpm

Mater Batch Stage

| | |
|---|---|
| Initial Temperature | 70°C |
| 0 min | charging polymers |
| 0.5 min | charging oil and Carbon Black |
| 3.0 min | drop |

Final Batch Stage

| | |
|---|---|
| Initial Temperature | 70°C |
| 0 sec | charging master stock |
| 2 min | charging curing agent and accelerators |
| 2.5 min | drop |

Table 4. Physical properties of the test bromobutyl rubbers.

| | HSA[1] | GPI | CC[2] | CT[3] | M&S[4] | STREM[5] | STRAM[6] |
|---|---|---|---|---|---|---|---|
| Example 5 | 35 | | 2.865 | 13.87 | | | |
| Example 6 | 38 | | 2.987 | 16.43 | | | |
| Example 7 | 50 | 50.2 | 2.846 | 9.22 | 105 | 909 | 844 |
| Example 8 | 53 | 60 | 3.445 | 13.48 | | | |
| Example 9 (Control 1) | 40 | 86.3 | 2.811 | 13.01 | 18.9 | 373 | 772 |
| Example 10 (Control 2) | 42 | 66.4 | 3.161 | 16.74 | | | |
| Example 11 (Control 3) | 33 | 100 | 2.237 | 8.69 | 14 | 324 | 812 |

Note:
1: HSA means Hardness Shore A at 23°C.
2: CC means Cure Capability ($S_{max}$ - $S_{min}$) (kg-cm).
3: CT means 90% Cure time 165°C (Min.).
4: M&S means modulus at 23°C and 35% strain.
5: STREM means stress at maximum (psi).
6. STRAM means strain at maximum (%).

The addition of exfoliated clay from Example 4 into butyl rubber has significantly lowered gas permeability of the butyl rubber, as compared to control samples. In Examples 5, 6, 7, and 8, various amounts of exfoliated clay from examples 3 or 4 were added to butyl rubber, and the samples have maintained approximately the same cure capability and cure time as those of the control samples. Figures 3 and 4 show the SAXS results for Example 8. Comparing to Figures 1 and 2, Figures 3 and 4 have an increased baseline, disappeared triplet peak around $2\theta \approx 4.2$, and decreased peak values between $2\theta \approx 1.0$ and $2\theta \approx 3.0$. Figures 3 and 4 indicate that the clay exists in a less organized form, reflecting that the organo-clay has been further exfoliated in the rubber compound.

**Examples 12-14: Natural Rubber Testing**

In a manner similar to the procedures of Examples 5-11, natural rubber commercially available as TC10 NR from Firestone Company has been tested with the organo-clay of Example 4. The testing results are tabulated in Table 5.

Table 5. Physical properties of the test TC10 NR.

| | Formulation | GPI | CC[2] | CT[3] | M&S[4] | STREM[5] | STRAM[6] |
|---|---|---|---|---|---|---|---|
| Example 12 | Ex. 4 Organo-clay + TC10 NR | 30.7 | 6.47 | 2.54 | 143 | 1949 | 765 |

(continued)

| | Formulation | GPI | CC2 | CT3 | M&S4 | STREM5 | STRAM6 |
|---|---|---|---|---|---|---|---|
| Example 13 | ME-100 + TC10 NR (Control) | | 8.19 | 3.43 | 28 | 692 | 679 |
| Example 14 | TC10 NR (Control) | 100 | 5.89 | 2.04 | 19 | 1149 | 862 |

**Examples 15-17: Styrene-Butadiene Rubber (SBR) Testing**

In a manner similar to the procedures of Examples 5-11, solution SBR commercially available as HX263 from Firestone Company has been tested with the organo-clay of Example 4. The testing results are tabulated in Table 6.

Table 6. Physical properties of the test HX263 SBR.

| | Formulation | GPI | CC2 | CT3 | M&S4 | STREM5 | STRAM6 |
|---|---|---|---|---|---|---|---|
| Example 15 | Ex. 4 Organo-clay + HX263 | 38.3 | 8.0 | 7.62 | 159 | 1155 | 619 |
| Example 16 | ME-100 + HX263 (Control) | | 11.07 | 16.75 | 40 | 335 | 242 |
| Example 17 | HX263 (Control) | 100 | 8.58 | 16.86 | 28 | 176 | 200 |

**Examples 18-20: Hcis-Butyl Rubber Testing**

In a manner similar to the procedures of Examples 5-11, Hcis-BR commercially available as Diene 600 from Firestone Company has been tested with the organo-clay of Example 4. The testing results are tabulated in Table 7.

Table 7. Physical properties of the test Diene 600 H*cis*-BR.

| | Formulation | GPI | CC2 | CT3 | M&S4 | STREM5 | STRAM6 |
|---|---|---|---|---|---|---|---|
| Example 18 | Ex. 4 Organo-clay + Diene 600 | 30.7 | 8.6 | 4.56 | 121 | 498 | 548 |
| Example 19 | ME-100 + Diene 600 (Control) | | 10.73 | 17.49 | 39 | 186 | 251 |
| Example 20 | Diene 600 (Control) | 100 | 8.78 | 16.21 | 26 | 167 | 185 |

**Examples 21-23: Solution Butyl Rubber Testing**

In a manner similar to the procedures of Examples 5-11, solution butyl rubber commercially available as Diene 40NF from Firestone Company has been tested with the organo-clay of Example 4. The testing results are tabulated in Table 8.

Table 8. Physical properties of the test Diene 40NF Soln BR.

| | Formulation | GPI | CC2 | CT3 | M&S4 | STREM5 | STRAM6 |
|---|---|---|---|---|---|---|---|
| Example 21 | Ex. 4 Organo-clay + Diene 40NF | 34.1 | 7.95 | 5.76 | 136 | 555 | 523 |
| Example 22 | ME-100 + Diene 40NF (Control) | | 12.68 | 17.50 | 42 | 255 | 177 |
| Example 23 | Diene 40NF (Control) | 100 | 10.03 | 18.36 | 27 | 156 | 162 |

The results of Examples 5-23 show that under 15wt% of loading, the tensile strengths of the test compounds were all better than that of the controls. Particularly, SBR shows the strongest interactions with the organo-mica, and it displays an 800% improvement in the tensile strength. Other benefits of using the treated ME100 include, for example, improved gas permeability and cure properties.

The rubber compositions of the present invention can be formulated into any component or article for which butyl rubber is typically utilized. Typical articles for which the butyl rubber compositions can be used include, but are not limited to, innertubes and tire inner liners, sidewall, thread rubber, hose, containers, air cushions, pneumatic sprays, air

bags, tire-curing bladders, air bellows, accumulator bags, pharmaceutical closures, high temperature hoses and conveyor belts, damping mounts for engines and the like.

**Example 24: The synthesis of 1-benyzl-3-hexadecanyl imidazolium chloride with Formula (IV)**

103g of 1-benzylimidazole (Aldrich) and 170g of 1-chlorohexadecane were added into a 2000ml three-neck round-bottom flask. A refluxing/cooling condenser was set on the left neck. A thermometer was set on the right neck. A rubber stopper was set on the middle neck. Nitrogen gas was delivered into the liquid phase through needle from the middle neck. The reactants were mixed with vigorous stirring using a magnetic stirrer. Temperature was kept between 70 and 80°C. After heating up to about 70-80°C, 1-benzylimidazole was dissolved into the 1-chlorohexadecane. The solution in the flask turned into a red brown solution. The reaction was continued for 72 hours. Then, the product was cooled down and a white product precipitated out of the solution. The product was washed with ethyl acetate. The washing step was repeated five times. After that, the product was dried in vacuum for seven hours at about 50°C.

**Example 25: Preparation of organo-mica**

80g of the product from Example 24, 40g of ME100 (Coop Chemical Co.) and 800g of deionized water were mixed together in a vessel and tumbled for 16 hours. The solution was filtered and the treated mica was collected. Then, it was dried in vacuum. TGA analysis showed that the treated mica contained 50.31 % of the inorganic residue.

**Example 26: Preparation of organo-mica (Reference)**

80g of the product from Example 2, 40g of ME100 (Coop Chemical Co.) and 800g of deionized water were mixed together in a vessel and tumbled for 16 hours. The solution was filtered and the treated mica was collected. Then, it was dried in a vacuum. TGA analysis showed that the treated mica contained 48.57% of the inorganic residue.

**Examples 27, 28, 29, and 30: Rubber mixing**

Examples 27, 28, 29, and 30 were prepared according to the formulation and the mixing conditions shown in Tables 9 and 10.

Table 9: Rubber Formulations

| | Ex. 27 | Ex. 28 | Ex. 29 | Ex. 30 |
|---|---|---|---|---|
| Treated mica | Ex. 25 | Ex. 26 | Me100 | None |
| Amount of the treated mica (g) | 12.99 | 13.33 | 7.5 | - |
| Amount of Br-IIR (g) | 37.01 | 36.67 | 42.5 | 50 |
| Remill stock (g) | 46.81 | 46.84 | 46.37 | 45.79 |
| Cure Packages (g) | | | | |
| Accelerator (DM)* | 0.69 | 0.69 | 0.79 | 0.92 |
| Sulfur | 1.04 | 1.03 | 1.18 | 1.37 |
| Stearic Acid | 0.62 | 0.62 | 0.71 | 0.82 |
| Zinc Oxide | 0.83 | 0.82 | 0.95 | 1.10 |
| *Altx-MBTS | | | | |

Table 10: mixing conditions

| | |
|---|---|
| Mixer 60g Brabender | Rotation Speed 60 rpm |
| <u>Master batch stage</u> | |
| Initial temperature | 70°C |
| 0.0 min | charging polymers |
| 0.5 min | charging treated mica |
| 3.0 min | drop |

(continued)

| | |
|---|---|
| Remill stage | |
| Initial temperature | 70°C |
| 0.0 min | charging master stocks |
| 3.0 min | drop |
| Final Batch | |
| Initial temperature | 70°C |
| 0.0 min | charging remill stocks |
| 0.5 min | charging cure packages |
| 2.0 min | drop |

After sheeting, rubber compounds were cured for 30 min at 165°C.

**Example 31: Rubber Testing**

In this example, the gas permeability was measured at 100°C by GTR-30ABS (GTR TEK Co LTD) and Fleon gas (F-134a, 1,1,1,2-tertrafluoroethane) was used as test gas.

Experimental results shown in Table 11 and Figure 5 indicate that Example 27 test rubber compounds have some improved cure properties such as presence of vulcanization plateau, and gas permeability index.

Table 11: Physical properties of test rubbers

| | Ex. 27 | Ex. 28 | Ex. 29 | Ex. 30 |
|---|---|---|---|---|
| Cure Capability ($S_{max}$-$S_{min}$) (kg-cm) | 2.63 | 2.35 | 2.68 | 2.14 |
| $T_{0.1}$ (10% cure time; min) | 1.86 | 1.13 | 2.06 | 1.96 |
| $T_{0.9}$ (90% cure time, min) | 10.59 | 16.40 | 19.88 | 16.98 |
| Gas permeability index | 40 | 42 | 78 | 100 |

The technology developed here can be used to develop rubber compounds for tire inner liners, sidewall, tread rubber, hose and containers. The technology can provide good cure systems and low gas permeability materials.

**Example 32**

A nitrogen purged Brabender mixer (~60g capacity) equipped with roller blades was initially set to 60 rpm and 75°C. The mixer was then charged with 30g of Hydrin H75 from ZEON Chemicals in Tokyo, Japan. After 1 minute, 26.6g of 1-methylimidazole (from Aldrich) was slowly added into the mixer, at about 5g/min. Then, the agitation speed was adjusted to 20 rpm and the heating element was set to an isothermal condition. After 22 hours, the material in the mixer became very viscous and the temperature was adjusted to 100°C. After 1 hour, the heating element was turned off and the polymer was allowed to cool down. The polymer was removed from the mixer at 23°C.

**Example 33**

A nitrogen purged Brabender mixer (~60g capacity) equipped with roller blades was initially set to 60 rpm and 75°C. The mixer was then charged with 35g of Hydrin H75 from ZEON Chemicals in Tokyo, Japan. After 1 minute, 26.6g of 1-methylimidazole (from Aldrich) was slowly added into the mixer, at about 5g/min. Then, the agitation speed was adjusted to 20 rpm and the heating element was set to be isothermal condition. After 21 hours, the polymer was removed from the mixer.

**Example 34** (Reference Example)

To a 50g Brabender mixer, 45g of Exxpro 3745 (from Exxon chemical) and 2.1g of tributylamine were added. The mixture was allowed to react at 100°C for 4 minutes. In the same time the mixture was agitated at speed of 60 rpm. The whole process was protected by nitrogen purging.

**Example 35** (Reference Example)

The process of example 34 was repeated with minor change of the materials used. In this example, to the 50g Brabender mixture were charged 45g of Exxpro 3745 and 1.5g of triallylamine.

**Example 36** (Reference Example)

38.4g of the product from Example 34 was mixed with MAE (from Coop Chemical Corp.) in the Brabender mixer at 60 rpm, 100°C for 3 minutes, wherein MAE is dimethylditallow ammonium treated mica. After the stock was cooled to room temperature, the stock was added to the Brabender again. The remill process was taken at 60 rpm, 100°C for 3 minutes.

**Example 37** (Reference Example)

The process of Example 36 was repeated with minor change of the material used. 38.4g of the product from example 2 was mixed with MAE.

**Example 38** (Reference Example)

38.4g of Exxpro 3745 was mixed with MAE in the Brabender mixer at 60rpm, 100°C for 3 minutes. The stock was cooled to room temperature. The stock was added to the Brabender again. The remill process was taken at 60rpm 100°C for 3 minutes.

**Example 39** (Reference Example)

Neat MAE powder and products from Examples 36, 37 and 38 were then examined using wide angle X-ray diffraction (XRD) and small angle X-ray scattering (SAXS) at 50kV and 200mA power. XRD and SAXS results in Figures 6 and 7 indicated that the new materials and the new treatment improved the exfoliation of MAE.

## Claims

1. A tire product comprising a nano-composite comprising

   (a) a cationic mediator comprised of a hydrophobic unit which is a $C_{24}$ hydrocarbon group or a polymeric group, and a heterocyclic cationic unit,
   (b) a clay, and
   (c) a carbon-chain or a heterochain polymer,

   wherein said clay is exfoliated or intercalated by said mediator and said polymer;
   wherein when the hydrophobic unit is a $C_{24}$ hydrocarbon group the mediator comprises the formula (I) as shown below:

   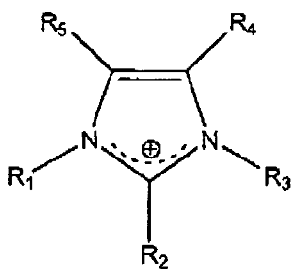

   (I)

   ,

   wherein at least one of $R_1$, $R_2$, $R_3$, $R_4$, and $R_5$ is a $C_{24}$ hydrocarbon group, and when the hydrophobic unit is a polymeric group the cationic unit of the mediator comprises an imidazolium group.

2. A tire product as claimed in claim 1 wherein the heterocyclic cation is selected from the group consisting of imidazolium, 1-alkylimidazolium, 1,3-dialkylimidazolium, 1-arylalkylimidazolium, 1-arylalky-3-alkyl-limidazolium, 1,3-diarylalkylimidazolium, benzimidazolium, imidazolinium, and mixtures thereof.

3. The tire product as claimed in claim 1, wherein the cationic mediator has the formula as shown below:

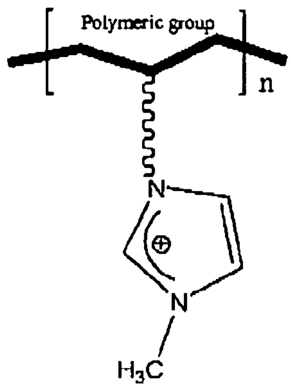

4. The tire product as claimed in claim 1, wherein the cationic mediator has the formula as shown below:

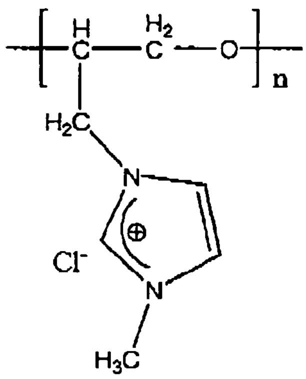

5. A tire product as claimed in claim 1, wherein the polymeric group comprises butyl rubber or isobutylene p-methylstyrene copolymer.

6. A tire product as claimed in any of claims 1 to 4, wherein the polymer is selected from the group consisting of butyl rubber, natural rubber, and styrene-butadiene rubber.

7. A method of making a tire product comprising:

exfoliating a clay,
combining with the clay a sufficient amount a cationic mediator comprised of a heterocyclic cationic unit and a hydrophobic unit which is a $C_{\geq 4}$ hydrocarbon group or a polymeric group, wherein when the hydrophobic unit is a $C_{\geq 4}$ hydrocarbon group the cationic mediator is of the formula (I) as shown below:

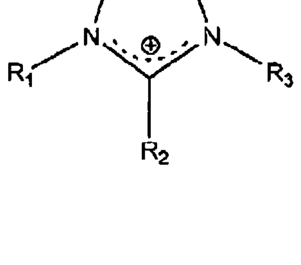
(I)

wherein at least one of $R_1$, $R_2$, $R_3$, $R_4$, and $R_5$ is a $C_{\geq 4}$ hydrocarbon group and when the hydrophobic unit is a polymeric group the cationic unit of the mediator comprises an imidizolium group; and
combining the exfoliated clay with a carbon chain or heterochain polymer.

**8.** A method as claimed in claim 7, wherein the polymer is selected from the group consisting of: butyl rubber, natural rubber, and styrene-butadiene rubber.

**9.** A method as claimed in claim 7 or 8, wherein the cationic mediator has the formula as shown below:

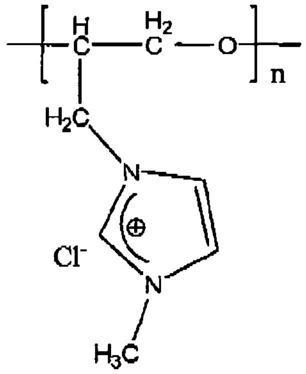

or

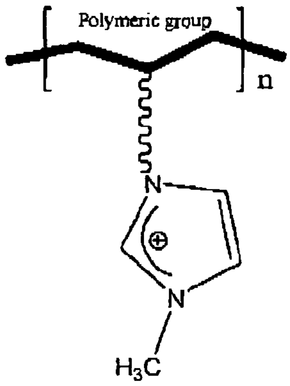

.

## Patentansprüche

**1.** Reifenprodukt umfassend einen Nanoverbundstoff umfassend:

(a) einen kationischen Mediator, der aus einer hydrophoben Einheit, die eine $C_{24}$-Kohlenwasserstoffgruppe oder eine polymere Gruppe ist, und einer heterocyclischen kationischen Einheit besteht,
(b) einen Ton und
(c) ein Kohlenstoffketten- oder ein Heteroketten-Polymer,

wobei der Ton durch den Mediator und das Polymer exfoliert oder interkaliert wird;
wobei, wenn die hydrophobe Einheit eine $C_{24}$-Kohlenwasserstoffgruppe ist, der Mediator die Formel (I) wie unten gezeigt umfasst.

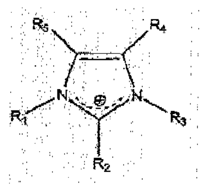

(I)

wobei mindestens eines von $R_1$, $R_2$, $R_3$, $R_4$ und $R_5$ eine $C_{24}$-Kohlenwasserstoffgruppe ist, und wenn die hydrophobe Einheit eine polymere Gruppe ist, die kationische Einheit des Mediator eine Imidazoliumgruppe umfasst.

**2.** Reifenprodukt nach Anspruch 1, wobei das heterocyclische Kation aus der Gruppe ausgewählt ist bestehend aus Imidazolium 1-Alkylimidazolium, 1,3-Dialkylimidazolium, 1-Arylalkylimidazolium, 1-Arylalkyl-3-alkylimidazolium, 1,3-Diarylalkylimidazolim, Benzimidazolium, Imidazolinium und Mischungen davon.

**3.** Reifenprodukt nach Anspruch 1, wobei der kationische Mediator die Formel wie unten gezeigt aufweist:

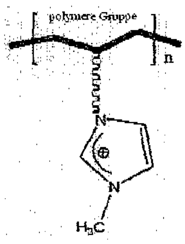

4. Reifenprodukt nach Anspruch 1, wobei der kationisch Mediator die Formel wie unten gezeigt aufweist:

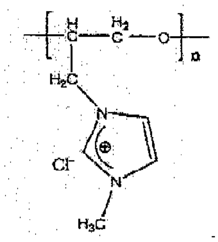

5. Reifenprodukt nach Anspruch 1, wobei die polymere Gruppe Butylkautschuk oder Isobutylen-p-Methylstyrol-Copolymer umfasst.

6. Reifenprodukt nach einem der Ansprüche 1 bis 4, wobei das Polymer aus der Gruppe ausgewählt ist bestehend aus: Butylkautschuk, Naturkautschuk und Styrol-Butadienkautschuk.

7. Verfahren zur Herstellung eines Reifenprodukts, umfassend:

das Exfolieren eines Tons;
das Kombinieren, mit dem Ton, einer ausreichenden Menge eines kationisches Mediators, der aus einer heterocyclischen kationischen Einheit und einer hydrophoben Einheit, die eine $C_{24}$-Kohlenwasserstoffgruppe oder eine polymere Gruppe ist, besteht, wobei, wenn die hydrophobe Einheit eine $C_{24}$-Kohlenwasserstoffgruppe ist, der kationische Mediator die Formel (I) wie unten gezeigt aufweist:

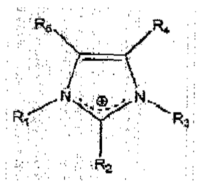

(I)

wobei mindestens eines von $R_1$, $R_2$, $R_3$, $R_4$ und $R_5$ eine $C_{24}$-Kohlenwasserstoffgruppe ist und wenn die hydrophobe Einheit eine polymere Gruppe ist, die kationische Einheit des Mediators eine Imidazoliumgruppe umfasst; und
das Kombinierten des exfolierten Tons mit einem Kohlenstoffketten oder Heterokettenpolymer.

8. Verfahren nach Anspruch 7, wobei das Polymer aus der Gruppe ausgewählt ist bestehend aus: Butylkautschuk, Naturkautschuk und Styrol-Butadienkautschuk.

9. Verfahren nach Anspruch 7 oder 8, wobei der kationische Mediator die Formel wie unten gezeigt aufweist:

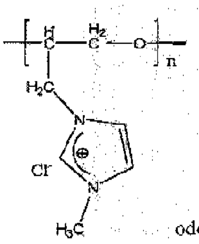

oder

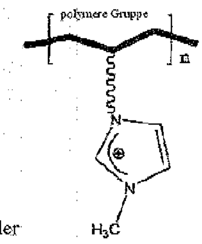

## Revendications

1. Produit pneumatique comprenant un nanocomposite comprenant

   (a) un médiateur cationique composé d'un motif hydrophobe qui est un groupe hydrocarbure en $C_{24}$ ou un groupe polymère, et un motif cationique hétérocyclique,
   (b) une argile, et
   (c) un polymère à chaîne carbonée ou à hétérochaîne,
   dans lequel ladite argile est exfoliée ou intercalée par ledit médiateur et ledit polymère;
   dans lequel lorsque le motif hydrophobe est un groupe hydrocarbure en $C_{24}$ le médiateur comprend la formule (I) telle que présentée ci-dessous: '

   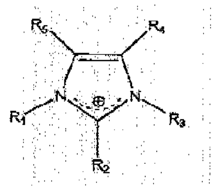 (I)

   dans lequel au moins l'un de $R_1$, $R_2$, $R_3$, $R_4$, et $R_5$ est un groupe hydrocarbure en $C_{24}$ et lorsque le motif hydrophobe est un groupe polymère, le motif cationique du médiateur comprend un groupe imidazolium.

2. Produit pneumatique tel que revendique selon la revendication 1, dans lequel le cation hétérocyclique est choisi parmi le groupe constitué de l'imidazolium, du 1 alkylimidazolium, du 1,3-diakylimidazolium, 1-arylalkylimidazolium, du 1-arylalkyl-3-alkyl-imidazolium, du 1,3-diarylalkylimidazolium, du benzimidazolium, de l'imidazolinium, et de leurs mélanges.

3. Produit pneumatique tel que revendique selon la revandication 1, dans lequel le médiateur cationique a la formule telle que présentée ci-dessous:

   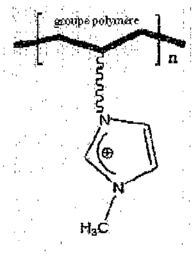

4. Produit pneumatique tel que revendiqué selon la revendication 1, dans lequel le médiateur cationique a la formule telle que présentée ci-dessous:

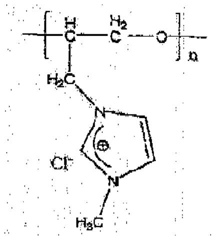

5. Produit pneumatique tel que revendique selon la revendication 1, dans lequel le groupe polymère comprend du caoutchouc de butyle ou un copolymère d'isobutylene p-méthylstyrène.

6. Produit pneumatique tel que revendiqué selon l'une quelconque des revendications 1 à 4, dans lequel le polymère est choisi parmi le groupe constitué du: caoutchouc de butyle, caoutchouc naturel et du caoutchouc de styrène-butadiène.

7. Procédé de fabrication d'un produit pneumatique comprenant:

l'exfoliation d'une argile,
la combinaison avec l'argile d'un quantité suffisante d'un médiateur cationique composé d'un motif cationique hétérocyclique et d'un motif hydrophobe qui est un groupe hydrocarbure en $C_{24}$ ou un groupe polymère, dans lequel lorsque le motif hydrophobe est un groupe hydrocarbure en $C_{24}$ le médiateur cationique est de formule (I) telle que présentée ci-dessous:

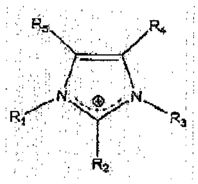

(I)

dans lequel au moins l'un parmi $R_1$, $R_2$, $R_3$, $R_4$, et $R_5$ est un groupe hydrocarbure en $C_{24}$ et lorsque le motif hydrophobe est un groupe polymère, le motif cationique du médiateur comprend un groupe imidizolium; et
la combinaison de l'argile exfoliée avec une chaîne carbonée ou un polymère à hétérochaîne.

8. Procédé tel que revendiqué selon la revendication 7, dans lequel le polymère est choisi parmi le groupe constitué du: caoutchouc de butyle, caoutchouc naturel, et du caoutchouc de styrène-butadiène.

9. Procédé tel que revendique selon la revendication 7 ou 8, dans lequel le médiateur cationique a la formule telle que présentée ci-dessous:

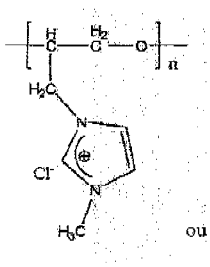

ou

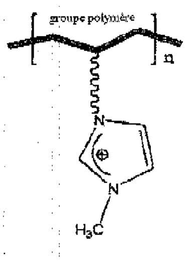

Figure 1

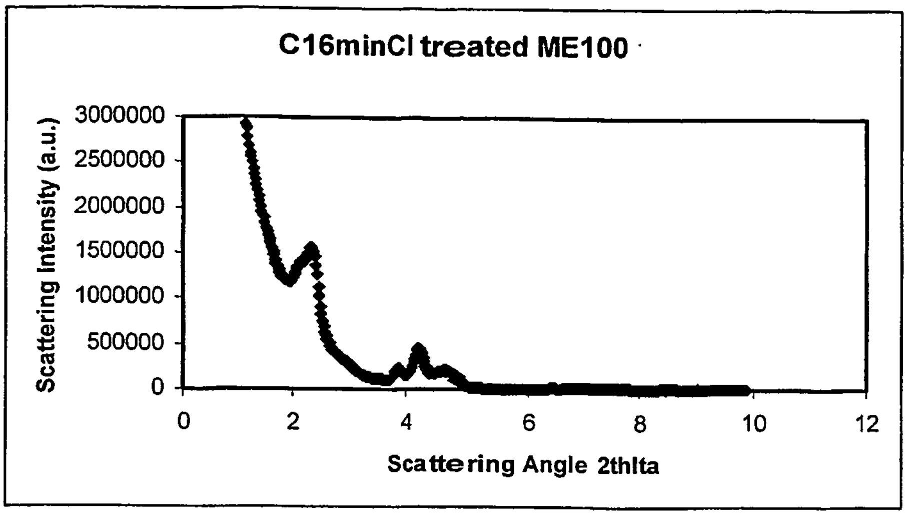


Figure 2

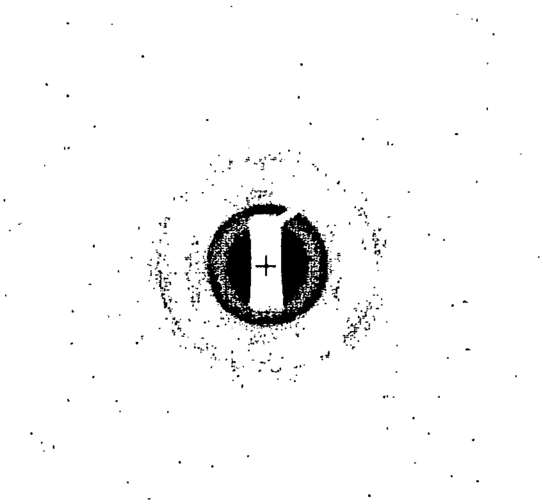

Figure 3

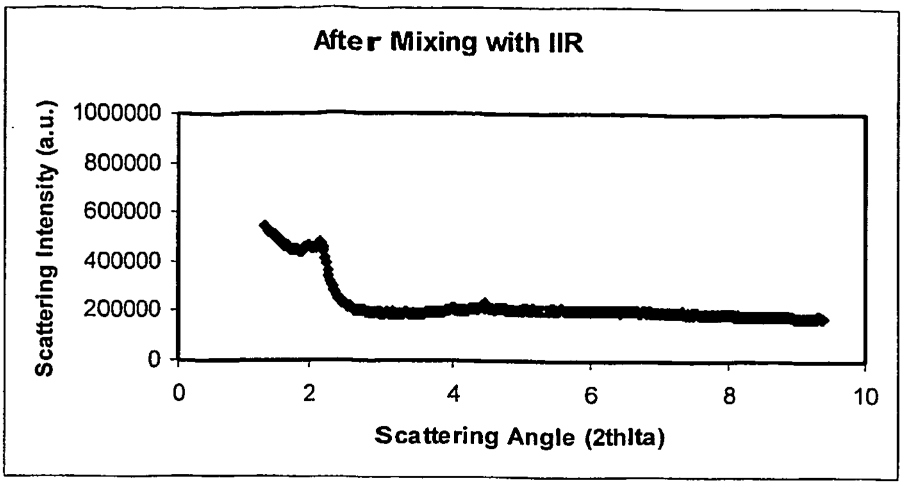


Figure 4

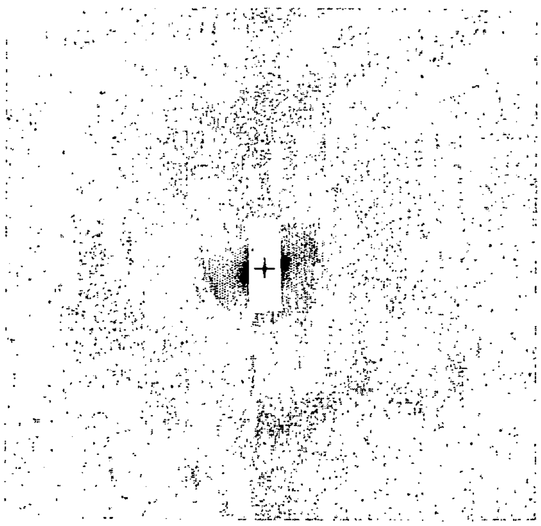

Figure 5

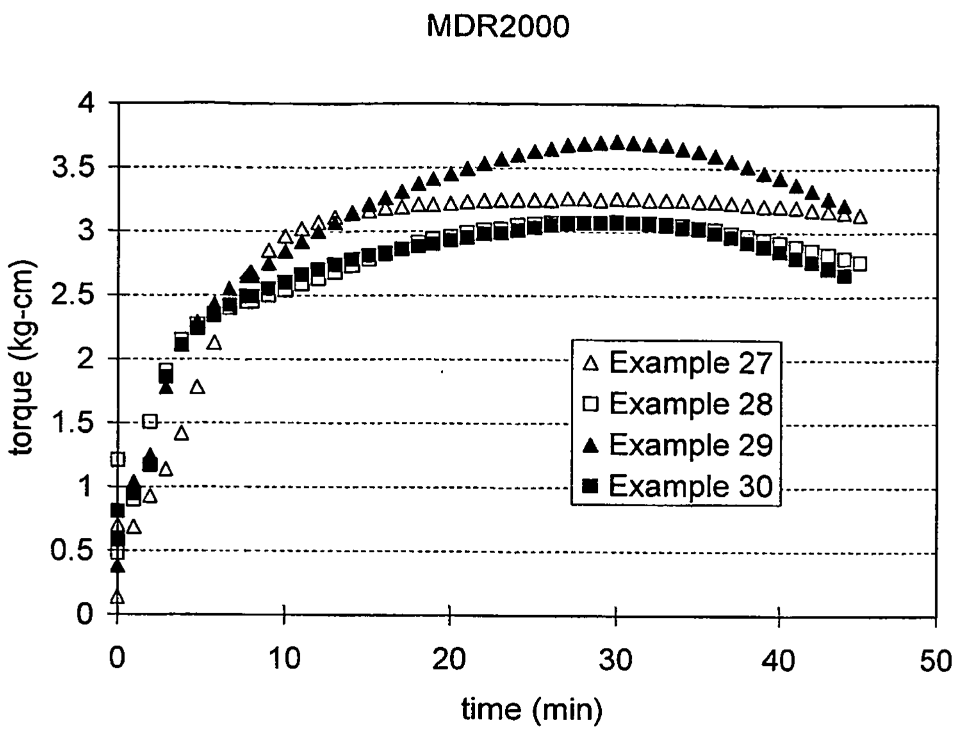
MDR2000
torque (kg-cm)
4
3.5
3
2.5
2
1.5
1
0.5
0
0
10
20
30
40
50
time (min)
Example 27
Example 28
Example 29
Example 30

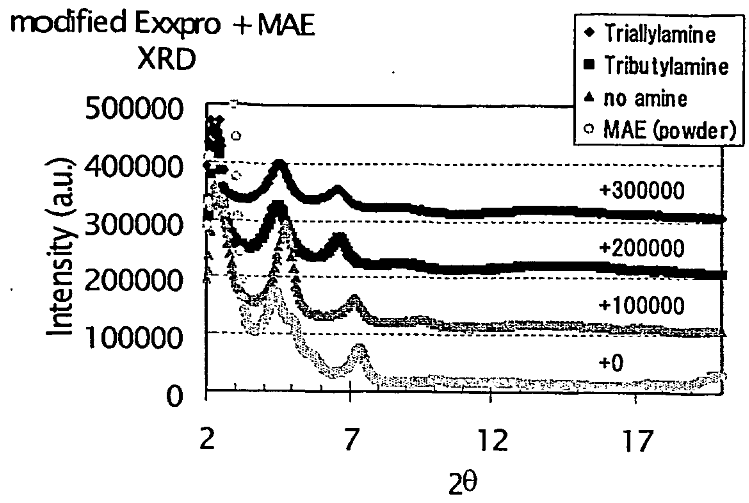


Figure 6

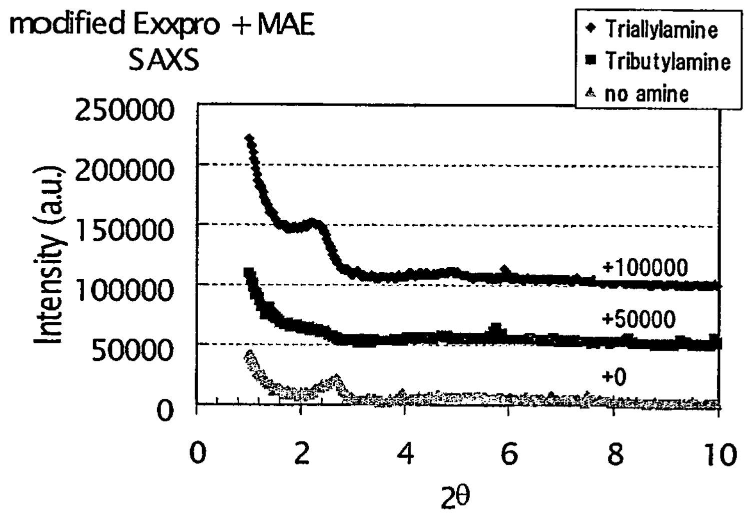


Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Usuki et al.** *J. Mater. Res.,* 1993, vol. 8, 1174